# EUROPEAN PATENT APPLICATION

(11) **EP 1 915 019 A1**
(43) Date of publication of application: **23.04.2008**
(21) Application number: 07253515.6
(22) Date of filing: 05.09.2007
(51) Int. Cl.: H04Q 7/38, H04Q 7/30

(54) **Handover control system, method for the same, and mobile communication system and radio base station using the same**

(30) Priority: 18.10.2006 JP 2006283214
(71) Applicant: NEC Corporation, Minato-ku Tokyo 108 (JP)
(72) Inventor: Akita, Hiroya, NEC Corporation, Tokyo (JP)
(74) Representative: Moir, Michael Christopher

(57) **Abstract**

A handover control system in a mobile communication system includes;
a first handover processing unit for controlling forwarding of user data from a source radio base station to a target radio base station in handover processing caused by movement of a mobile communication terminal;
a second handover processing unit for controlling transmission of the user data from an upper layer node to both the source radio base station and the target radio base station in the handover processing; and
a control unit for selectively activating either the first handover processing means or the second handover processing means according to a preliminarily requested communication quality for the user data.

## Description

### INCORPORATION BY REFERENCE

This application is based upon and claims the benefit of priority from Japanese patent application No. 2006-283214 filed on October 18, 2006, the disclosure of which is incorporated herein in its entirety by reference.

### BACKGROUND OF THE INVENTION

### Field of the Invention

The present invention relates to handover control systems, method for the same, and mobile communication system and radio base station using the same and more particularly to a handover control scheme in a mobile communication system.

### Description of Related Art

3GPP (3rd Generation Partnership Project) that studies and determines detailed standards for mobile communication systems has been studying a radio access network technology for a next-generation mobile communication system whose keywords are the large capacity, short delay, and optimized packet communications. This technology is called UTRAN LTE (Universal Terrestrial Radio Access Network Long Term Evolution). At the same time, a framework on a core-network side called SAE (System Architecture Evolution) is under study.

The study of the UTRAN LTE assumes that functions of a conventional radio base station (Node B) and a conventional RNC (Radio Network Controller) are implemented in one node, which is called an eNB (evolved Node B).

The technical document TR3.018 V0.2.0 of 3GPP discusses a scheme for implementing handover between eNBs, in which hard handover is performed and in order to prevent data loss data forwarding of user data is performed from an eNB (source eNB) to which a mobile terminal (UE (User Equipment)) has belonged before moving to an eNB (target eNB) to which the UE is to belong after moving. This hard handover scheme with the user data forwarding is based on the assumption that no data loss or no delay will occur because the time required for the data forwarding is short enough compared to the time between output of a handover command by the source eNB to the mobile terminal and synchronization of the target eNB and the mobile terminal.

However, in some cases, the data forwarding may take some time. For real-time services such as VoIP (Voice over IP), there can be a risk of degradation in the quality of service due to data loss and transmission delay caused by this data forwarding delay.

In the UTRAN LTE premised on building a network only by packet communications, enabling fine QoS (Quality of Service) control greatly contributes to the achievement of a stable QoS. Therefore, in the handover process, it is beneficial to select a handover scheme less likely to cause data loss and transmission delay depending on a requested QoS.

Referring here to Japanese Patent Laid-Open No. 2002-159036 (Patent Document 1), a technique of judging QoS information and selecting a handover control scheme according to the QoS, is disclosed. That is, a source base station judges QoS information about a call of a mobile terminal and selects a so-called anchor type handover control scheme if it is a real-time call and selects a so-called non-anchor type handover control scheme if it is a non-real-time call.

As described above, the handover procedure between eNBs in the UTRAN LTE of 3GPP is being studied with the assumption of the hard handover scheme, in which instant switching to a cell in the optimal reception environment is continuously performed as the reception environment changes with the movement of the UE. Also as described above, the user data forwarding from the source eNB to the target eNB is being studied here for preventing user data loss at the time of cell switching. This is based on the assumption that the time required for the data forwarding is short enough compared to the time between output of a handover command by the source eNB to the mobile terminal and synchronization of the target eNB and the mobile terminal.

While this handover scheme is very simple in its signaling procedure and therefore reduction of the load on apparatuses can be expected, it has drawbacks in guaranteeing user data transmission. For example, in the case such as where the amount of user data to be forwarded from the source eNB to the target eNB is huge, or where a relay apparatus provided in a wired section between the eNBs is affected by another traffics and temporarily congested, it is possible that the user data forwarding is not finished yet when the synchronization is established between the target eNB and the mobile terminal.

Even if the handover processing is finished, the user data is transmitted from an upper layer node to the source eNB until the target eNB requests the upper layer node to switch the destination of the user data transmission from the source eNB to its own node i.e., the target eNB. Therefore, the source eNB needs to continue transmitting the user data to the target eNB.

Furthermore, since the user data is transmitted to the target eNB from both the source eNB and the upper layer node aGW (access Gateway), the target eNB needs to control the order of the user data and requires processing time for it. As a result, loss or delay of user data that should arrive at the mobile terminal can occur, introducing degradation in the quality of service. This quality degradation is a significant problem especially in the use of real-time services such as VoIP

In the aforementioned technique in the Patent Document 1, the anchor type or non-anchor type handover control scheme is selected depending on the QoS for each call. The anchor type handover control scheme involves, in the core network of a mobile communication system, setting a point (a particular node) on a path as an anchor point before switching (handover) and then switching lines while leaving the anchor point on the path. On the other hand, the non-anchor type handover control scheme involves, in the core network, disconnecting all lines set to the source base station and then switching the lines after setting again an optimal path to the target base station.

This selection between the anchor type and non-anchor type handover control schemes is valid in mobile communication systems of generations preceding the UTRAN LTE system. In the UTRAN LTE system, as described above, the source eNB forwards the user data to the target eNB at the time of handover and then the upper layer node aGW transmits the user data. Basically, this handover control scheme cannot be significantly changed. Therefore, the selection between the anchor type and the non-anchor type handover control schemes as in the Patent Document 1 cannot be applied to the UTRAN LTE system.

### SUMMARY

An object of at least the preferred embodiments of the invention is to provide a handover control system, a method for the same, and a mobile communication system and a radio base station using the same that are capable of basically maintaining a handover procedure under study in the UTRAN LTE standardization by 3GPP while, for a service or user desiring a higher QoS, maintaining a communication quality with less data loss and loss data delay.

One aspect of the invention is a handover control system in a mobile communication system, including:
a first handover processing unit for controlling forwarding of user data from a source radio base station to a target radio base station in handover processing caused by movement of a mobile communication terminal;
a second handover processing unit for controlling transmission of the user data from an upper layer node to both the source radio base station and the target radio base station in the handover processing; and
a control unit for selectively activating either the first handover processing means or the second handover processing means according to a preliminarily requested communication quality for the user data.

A second aspect of the invention is a handover control method in a mobile communication system, including:
selectively activating either a first handover procedure or a second handover procedure according to a preliminarily requested communication quality for user data,
wherein the first handover procedure is a step of forwarding the user data from a source radio base station to a target radio base station in a handover processing caused by movement of a mobile station, and the second handover procedure is a step of transmitting the user data from an upper layer node to both the source radio base station and the target radio base station in the handover processing.

A third aspect of the invention is a source radio base station for performing handover control involved in movement of a mobile communication terminal in a mobile communication system, including:
a first handover processing unit for controlling forwarding of user data to a target radio base station in handover processing of the mobile communication terminal;
a second handover processing unit for instructing an upper layer node to transmit the user data to both the source radio base station and the target radio base station in the handover processing; and
a selection control unit for selectively activating either the first handover processing unit or the second handover processing unit depending on a preliminarily requested communication quality for the user data.

Other preferred but optional features are as set out in the dependent claims.

### BRIEF DESCRIPTION OF THE DRAWINGS

FIG. 1 is a schematic system diagram to which exemplary embodiments of the invention are applied;
FIG. 2 is a functional block diagram of an eNB in the exemplary embodiments of the invention;
FIG. 3 is a functional 1 block diagram of a UE (mobile communication terminal) in the examplary embodiments of the invention;
FIG. 4 is a functional block diagram of an aGW (access Gateway) in the exemplary embodiments of the invention;
FIG. 5 is a system diagram for describing operations in a normal QoS mode in the exemplary embodiments of the invention;
FIG. 6 is an operational sequence diagram in the normal QoS mode in the exemplary embodiments of the invention;
FIG. 7 is a diagram describing the time (point) at which an event is reported by the UE to a source eNB in the normal QoS mode in the exemplary embodiments of the invention;
FIG. 8 is a system diagram for describing operations in an excellent QoS mode in the exemplary embodiments of the invention;
FIG. 9 is a diagram describing the time (point) at which events are reported by the UE to the source eNB in the excellent QoS mode in the exemplary embodiments of the invention; and
FIG. 10 is an operational sequence diagram in the excellent QoS mode in the exemplary embodiments of the invention.

### DETAILED DESCRIPTION OF THE EXEMPLARY EMBODIMENTS

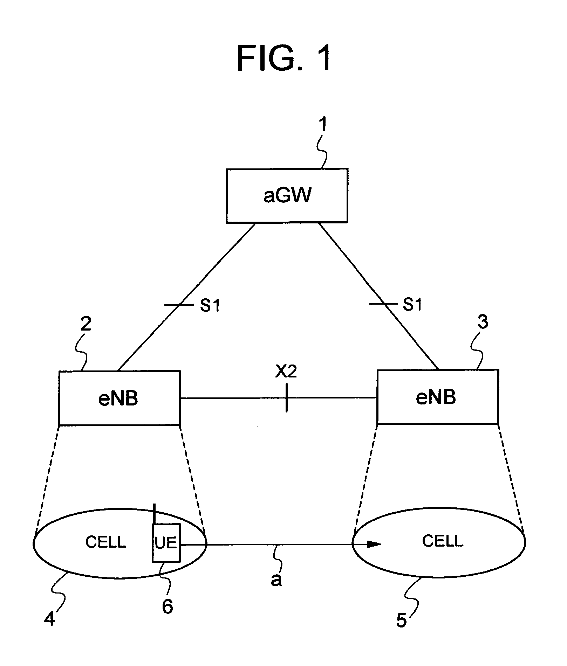

Exemplary embodiments of the invention will be described below using the drawings. FIG. 1 is a schematic system diagram to which the exemplary embodiments of the invention are applied. With reference to FIG. 1, eNBs 2 and 3 in the UTRAN LTE system have cells 4 and 5 as their coverage respectively. Each of these eNBs 2 and 3 implements functions of a radio base station (Node B) and a radio network controller (RNC) in conventional mobile communication systems in one node and is herein called a radio base station.

These eNBs 2 and 3 are connected to a core-network node aGW 1 via S1 interfaces. An interface connecting the eNBs with each other is called an X2 interface, via which UE information and user data are forwarded at the time of handover. The present invention is an improvement of a handover procedure when a UE (mobile terminal) 6 in the cell 4 of the eNB 2 moves in the direction of an arrow a and enters the adjacent cell 5 of the eNB 3. Therefore, in the following description, the eNB 2 is a source eNB and the eNB 3 is a target eNB.

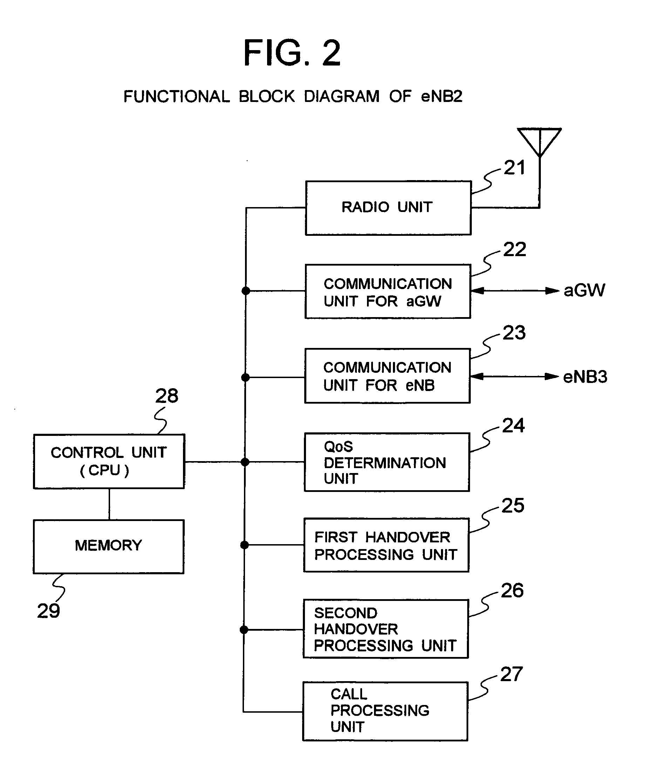

FIG. 2 is a schematic functional block diagram of the eNB 2. The figure is shown only for the eNB 2 because it will be exactly the same for the eNB 3 as well. With reference to FIG. 2, a radio unit 21 communicates with the UE 6. A communication unit 22 for aGW communicates with the upper layer node aGW 1 and is connected to the S 1 interface in F I G . 1. A communication unit 23 for eNB communicates with the other eNB 3 and is connected to the X2 interface in FIG. 1. A QoS determination unit 24 determines the QoS class which the UE 6 requested when connected to a communication service or the QoS class to which the user himself has subscribed, by obtaining the QoS class from the upper layer node aGW 1 upon connection of a call.

A first handover processing unit 25 is activated if the QoS is determined by the QoS determination unit 24 as a normal QoS, and performs handover processing according to a normal QoS mode handover procedure currently under study in the LTE system of 3GPP. In contrast, a second handover processing unit 26 is activated if the QoS is determined by the QoS determination unit 24 as an excellent QoS requiring a high quality, and performs handover processing according to an excellent QoS mode handover procedure of the present invention. A call processing unit 27 controls call connection when the UE 6 connects to a communication service.

A CPU 28 serving as a control unit controls operations of the above-described units 21 to 27 and has a function of performing the control operations according to a procedure of a program stored in a memory 29. The memory 29 has a function of ROM storing the program, as well as a function of RAM serving as working memory for the CPU 28.

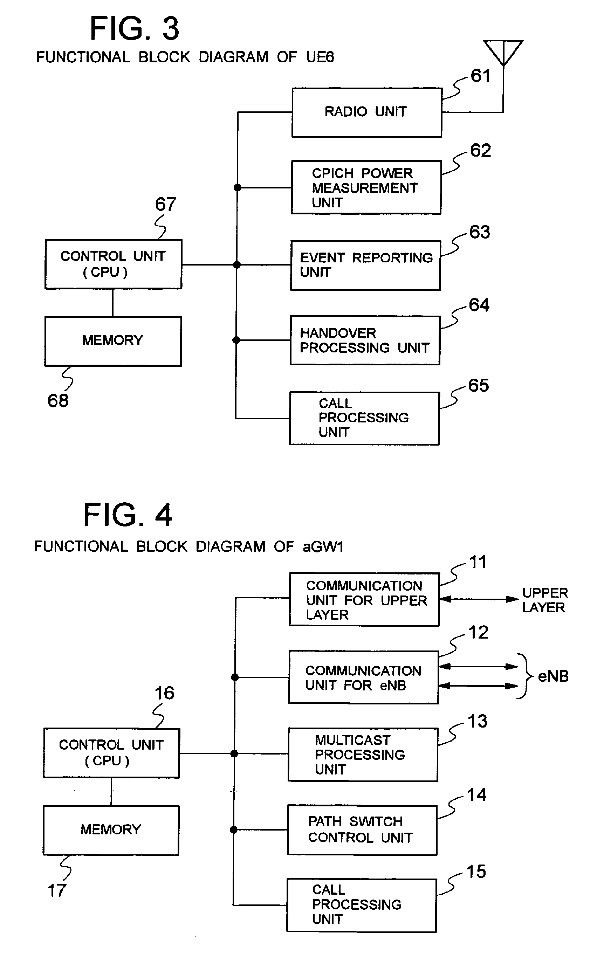

FIG. 3 is a schematic functional block diagram of the UE 6. With reference to FIG. 3, a radio unit 61 communicates with the eNBs 2 and 3. A CPICH power measurement unit 62 measures received power of the CPICH (Common Pilot Channel) in each of the cells 4 and 5 under instruction of the eNB at the time of handover. An event reporting unit 63 reports an event to the source eNB 2 if the result of the received power measurement by the CPICH power measurement unit 62 at the time of handover meets a condition designated by the source eNB 2. A handover processing unit 64 performs processing according to a handover procedure in cooperation with the source eNB 2 and the target eNB 3. A call processing unit 65 controls call connection.

A CPU 67 serving as a control unit controls operations of the above-described units 61 to 65 and performs the control operations according to a procedure of a program stored in a memory 68. The memory 68 stores the program and also has a function of temporary data storage.

FIG. 4 is a schematic functional block diagram of the aGW 1. With reference to FIG. 4, a communication unit 11 for an upper layer is connected to a further upper layer in the core network. A communication unit 12 for eNB communicates with the eNBs 2 and 3 and is connected to the S1 interface in FIG. 1. A multicast processing unit 13 multicasts user data for the UE 6 to both the eNBs 2 and 3 via the S1 interface in handover processing in the excellent t QoS mode. A path switch control unit 14 switches a communication path of the UE 6 from the eNB 2 to the eNB 3 in response to the finish of the handover of the UE 6. A call processing unit 15 controls call connection of the UE.

A CPU 16 serving as a control unit controls the above-described units 11 to 15 and performs the control operations according to a procedure of a program stored in a memory 17. The memory 17 stores the program and also has a function of temporary data storage.

Operations in the exemplary embodiments of the invention will be described below. First, it is assumed that the communication quality of a current call of the UE 6 is the normal QoS class. The source eNB 2 can know the QoS class that the UE 6 requested when connected to a communication service or the QoS class to which the user has subscribed, via the aGW 1 upon connection of the call. This is performed through the QoS determination unit 24 (see FIG. 2). As a handover procedure for this normal QoS, the normal QoS mode handover procedure will be performed.

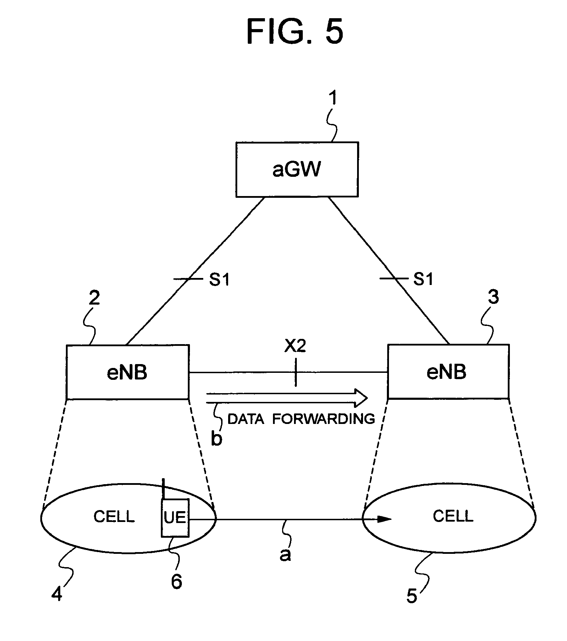

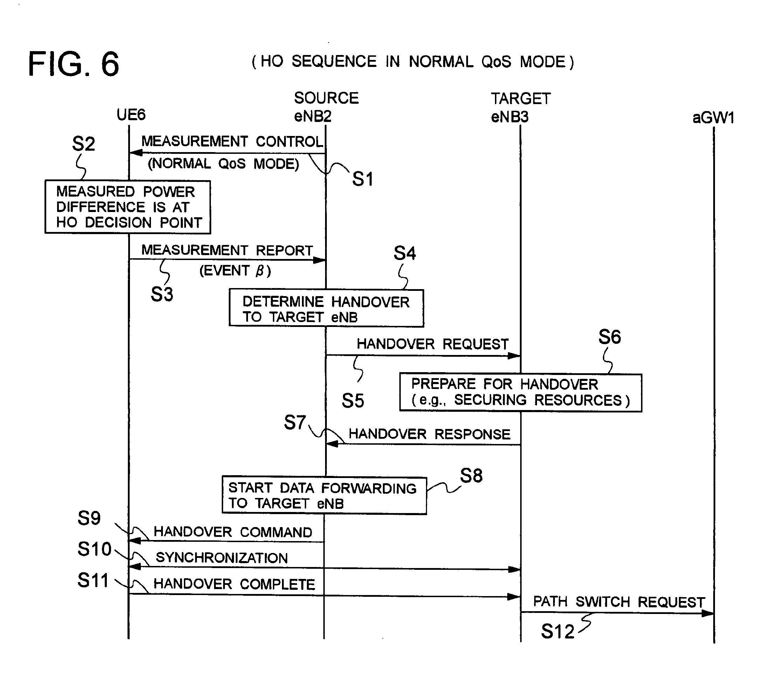

FIG. 5 shows the overview of operations in this case, in which elements equivalent to those in FIG. 1 are denoted by like symbols. In this mode, as shown in FIG. 5, when the UE 6 moves along the arrow a and enters a handover state, data forwarding (b) is performed via the X2 interface between the source eNB 2 and the target eNB 3. This is the handover procedure under study in the UTRAN LTE. This normal QoS mode handover procedure will be described using FIG. 6.

The source eNB 2 generates to UE 6 a "Measurement Control" message, which is a CPICH power measurement instruction (step S1), to instruct the UE 6 to measure the radio wave environment. This message includes an instruction to report an event β when the difference between CPICH measured powers in the cells 4 and 5 reaches a threshold β. The CPICH power measurement unit 62 in the UE 6 measures the power of the CPICH in the source cell 4 and the target cell 5.

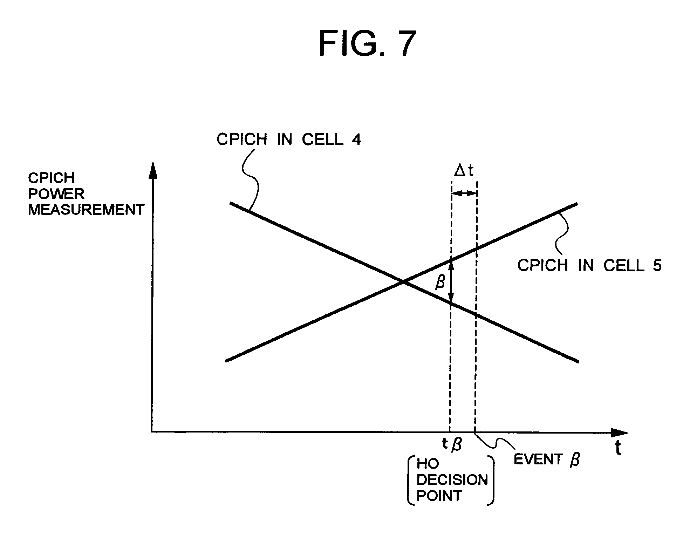

FIG. 7 schematically shows the relationship between the power measurements and time t in this case. When the difference between the power measurements of the CPICH in the source cell 4 and the target cell 5 reaches the predetermined threshold β, the handover processing unit 64 in the UE 6 determines that the UE 6 reaches an HO decision point (step S2) and reports a "Measurement Report" as the event β to the source eNB 2 (step S3).

Upon receiving this report, the source eNB 2 determines t-o proceed to a handover procedure (step S4) and transmits a "Handover Request" message including information about the UE 6 and so on to the target eNB 3 via the X2 interface (step S5) to prompt the target eNB 3 to start preparation for handover, such as securing resources. The QoS determination unit 24 in the target eNB 3 determines that the QoS class of the UE 6 in this case is the normal QoS class from the information about the UE 6 included in the "Handover Request" message from the source eNB 2. Therefore, the first handover processing unit 25 that performs the normal QoS mode handover procedure is selectively activated.

Thus the preparation for handover of the target eNB 3 is completed (step S6), and a "Handover Response" message is transmitted from the target eNB 3 to the source eNB 2 (step S7). In response to this, the source eNB 2 forwards to the target eNB 3 user data for which an ACK (Acknowledge) has not been received yet from the UE 6 (represented as Data Forwarding b in FIG. 5) (step S8) and transmits a "Handover Command" message to the UE 6 (step S9).

After "Synchronization" (step S10) processing is performed between the UE 6 and the target eNB 3 and the UE 6 completes transfer to the target cell 5, the target eNB 3 receives a "Handover Complete" (step S11) report from the UE 6. Then, the target eNB 3 transmits a "Path Switch Request" message to the aGW 1 to request the aGW- 1 to switch the path for the UE 6 from the source eNB 2 to the target eNB 3 (step S12).

The aGW 1 then changes the destination of the user data to the target eNB 3, where the series of processes of the handover procedure are completed. As described above, this handover procedure is exactly the handover procedure under study in the LTE system and is herein called the normal QoS mode handover procedure.

Now, description will be given in the case where the UE 6 is being provided with a service in a higher QoS class. That is, the communication quality of the current call of the UE 6 is the excellent QoS class. As described above, the source eNB 2 can know the QoS class that the UE 6 requested when connected to a service or the QoS class to which the user has subscribed, via the host aGW 1 upon connection of the call. As a handover procedure for this excellent QoS, the excellent QoS mode handover procedure will be performed.

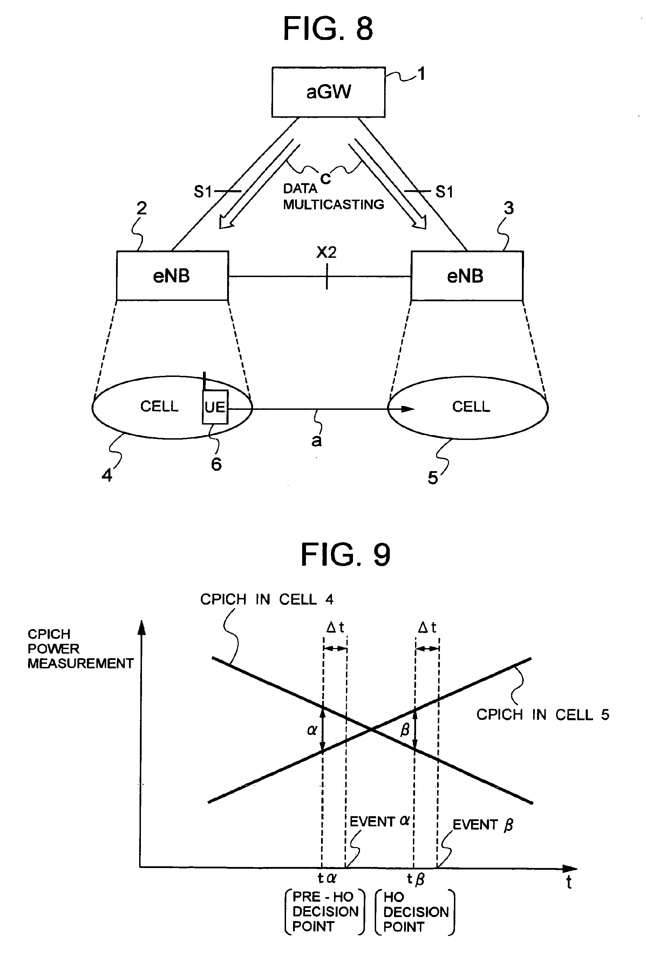

FIG. 8 shows the overview of operations in this case, in which elements equivalent to those in FIG. 1 are denoted by like symbols. In this mode, in addition to the event β in the normal QoS mode, an event α is defined as another event type that the UE 6 reports to the source eNB 2 in a "Measurement Report" message while moving along the arrow a as shown in FIG. 8. As shown in FIG. 9, the time to report the event α is when it can be determined from the power measurements that the UE 6 is moving from the cell 4 to the cell 5. This time (point) is referred to as a "pre-handover decision point". The event α has a meaning of notifying that the "handover decision point" will soon be reached.

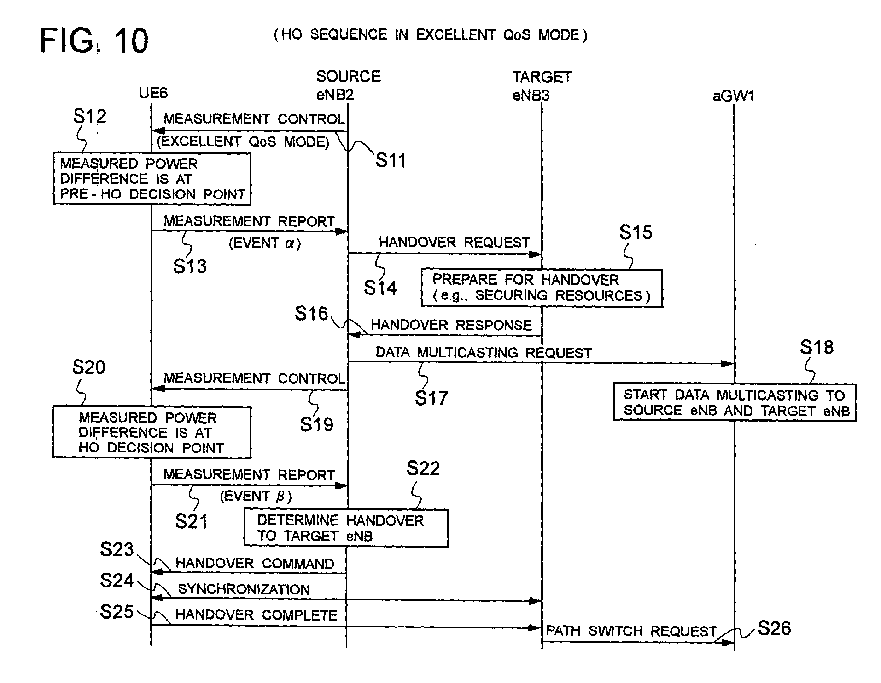

FIG. 10 is an operational sequence diagram in this case. In this excellent QoS mode, first the source eNB 2 transmits a "Measurement Control" message to the UE 6 (step S11). This message is a CPICH power measurement instruction and also includes a designation of an event report point as the "pre-handover (HO) decision point". That is, it instructs to report the event α when the difference between the measured powers reaches a threshold α

Therefore, when the difference between the measured powers in the cell 4 and the cell 5 reaches the threshold α corresponding to the "pre-HO decision point" (step S12), the UE 6 reports the event α as the "Measurement Report" to the source eNB 2 (step S13).

Upon receiving this report of the event α, the source eNB 2 transmits a "Handover Request" message to the target eNB 3 to prompt the target eNB 3 to start preparation for handover, such as securing resources (step S14). At this time, information about the UE 6 is also transmitted. When the preparation for handover of the target eNB 3 is completed (step S15), a report thereof is given to the source eNB 2 (step S16). In response to this, the source eNB 2 requests the node aGW 1 to multicast user data to both the source eNB 2 and the target eNB 3 (step S17).

The aGW 1 multicasts the user data to both the eNBs 2 and 3 (step S18). The source eNB 2 again transmits a "Measurement Control" message to the UE 6 (step S19). This message includes a request to report the event β.

When the difference of the measured powers in the cell 4 and the cell 5 reaches the "HO decision point" (step S20), the UE 6 reports the event β to the source eNB 2 (step S21). Upon receiving this report of the event β, the source eNB 2 determines to proceed to a handover procedure (step S22) and transmits a "Handover Command" message to the UE 6 (step S23).

When the handover is completed (steps S24 and S25), the source eNB 2 transmits a "Path Switch Request" message to the aGW 1 (step S26) Once this message is received, the aGW 1 switches the path to shift from the state where the user data is being transmitted to both the source eNB 2 and the target eNB 3 (multicast state) to the state where the user data is transmitted only to the target eNB 3.

In this manner, while the normal handover procedure under study in the 3GPP LTE standardization is basically maintained the excellent mode handover procedure enabling a higher quality than the normal handover procedure is provided for a service or user desiring a higher QoS. This reduces the possibility of loss and delay of user data, thereby allowing expectation of improvement in the quality of service that can be provided to the user.

More specifically, since the use of the excellent mode handover procedure eliminates the need of processing for forwarding the user data between the eNBs, there is no risk of transmission delay in the transmission path between the eNBs (X2 interface). Processing load on the target eNB required in controlling the order of the user data is significantly reduced because the target eNB receives the user data always only from the aGW. Therefore, the risk of loss and delay of data to be transmitted to the UE is extremely reduced.

In the above-described excellent QoS mode, the "Measurement Control" message is used to designate the thresholds α and β for the power difference between the cell 4 and the cell 5 to set the "pre-handover point" and the "handover point". However, when the UE is moving at a high speed, it may be required that the UE can detect both points in a timely manner. Therefore, in such a case in the excellent QoS mode, it is effective to set the power measurement time interval in the UE shorter in the "Measurement Control" message in addition to designating the thresholds α and β for the power difference between the cell 4 and the cell 5.

In the excellent QoS mode, the "Measurement Control" messages are used to designate first the "pre-handover point" and then the "handover point" separately. However, it is of course possible to designate both "points" in the first "Measurement Control" message. In this case, a flag or the like indicating that the mode is the excellent QoS mode is required in the "Measurement Control" message.

It is apparent that the operational sequences in the above exemplary embodiments may be configured in such a manner that their operational procedure is stored as a program in a recording medium such as ROM in each of the mobile communication terminal, the eNBs, and the aGW to cause a computer (CPU) to read and execute the program.

An exemplary advantage according to the invention is that, by providing the excellent QoS mode handover procedure for a service or user desiring a higher QoS while basically maintaining the handover procedure according to the UTRAN LTE standardization, the possibility of data loss and data delay is reduced to allow expectation of improvement in the quality of service that can be provided to the user.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

Each feature disclosed in this specification (which term includes the claims) and/or shown in the drawings may be incorporated in the invention independently of other disclosed and/or illustrated features. In particular but without limitation the features of any of the claims dependent from a particular independent claim may be introduced into that independent claim in any combination.

Statements in this specification of the "objects of the invention" relate to preferred embodiments of the invention, but not necessarily to all embodiments of the invention falling within the claims.

The description of the invention with reference to the drawings is by way of example only.

## Claims

1. A handover control system in a mobile communication system, comprising:
a first handover processing unit for controlling forwarding of user data from a source radio base station to a target radio base station in handover processing caused by movement of a mobile communication terminal;
a second handover processing unit for controlling transmission of the user data from an upper layer node to both the source radio base station and the target radio base station in the handover processing; and
a control unit for selectively activating either the first handover processing means or the second handover processing means according to a preliminarily requested communication quality for the user data.

2. A source radio base station for performing handover control involved in movement of a mobile communication terminal in a mobile communication system, comprising:
a first handover processing unit for controlling forwarding of user data to a target radio base station in handover processing of the mobile communication terminal;
a second handover processing unit for instructing an upper layer node to transmit the user data to both the source radio base station and the target radio base station in the handover processing; and
a selection control unit for selectively activating either the first handover processing unit or the second handover processing unit depending on a preliminarily requested communication quality for the user data.

3. A handover control system or a base station according to claim 1 or 2, wherein the control unit is configured selectively to activate the first handover processing unit if the communication quality is a first class, and selectively to activate the second handover processing unit if the communication quality is higher than the first class.

4. A handover control system or a base station according to claim 1 or 2, wherein the second handover processing unit comprises:
a unit for controlling transmission of the user data from the host to both the source radio base station and the target radio base station at a first point of time reported from the mobile communication terminal; and
a unit for switching a path of the mobile communication terminal to the target radio base station at a second point of time reported following the first point of time from the mobile communication terminal.

5. A handover control system or a base station according to claim 4, wherein the first and second points of time are determined according to a difference between measurements of received power for information transmitted from the source radio base station and the target radio base station.

6. A handover control system or a base station according to claim 5, wherein the first and second points of time are when the difference reaches first and second thresholds respectively.

7. A handover control system or a base station according to claim 6, wherein the source radio base station is configured to set the first and second thresholds to the mobile communication terminal.

8. A handover control system or a base station according to any one of claims 5 to 7, wherein the source radio base station is configured to set to the mobile communication terminal a time interval of measuring the received power in the mobile communication terminal.

9. A mobile communication system comprising the handover control system or a base station according to any one of claims 1 to 8.

10. A handover control method in a mobile communication system, comprising:
selectively activating either a first handover procedure or a second handover procedure according to a preliminarily requested communication quality for user data,
wherein the first handover procedure is a step of forwarding the user data from a source radio base station to a target radio base station in a handover processing caused by movement of a mobile station, and the second handover procedure is a step of transmitting the user data from an upper layer node to both the source radio base station and the target radio base station in the handover processing.

11. A handover control method according to claim 10, wherein the first handover procedure is selectively activated if the communication quality is a first class, and the second handover procedure is selectively activated if the communication quality is higher than the first class.

12. A handover control method according to claim 10 or 11, wherein the second handover procedure comprises:
controlling transmission of the user data from the upper layer node to both the source radio base station and the target radio base station at a first point of time reported from the mobile communication terminal; and
switching a path of the mobile communication terminal to the target radio base station at a second point of time reported following the first point of time from the mobile communication terminal.

13. A handover control method according to claim 12, wherein the first and second points of time are determined according to a difference between measurements of received power for information transmitted from the source radio base station and the target radio base station.

14. A handover control method according to claim 13, wherein the first and second points of time are when the difference reaches first and second thresholds respectively.

15. The handover control method according to claim 12, wherein the first and second thresholds are set by the source radio base station to the mobile communication terminal.

16. The handover control method according to any one of claims 13 to 15, wherein a time interval of measuring the received power in the mobile communication terminal is set by the source radio base station to the mobile communication terminal.
